# EUROPÄISCHE PATENTSCHRIFT

(11) **EP 0 897 524 B1**
(45) Veröffentlichungstag und Bekanntmachung des Hinweises auf die Patenterteilung: **06.03.2002**
(21) Anmeldenummer: 97923781.5
(22) Anmeldetag: 30.04.1997
(51) Int. Cl.: G01B 11/24

(54) **VORRICHTUNG ZUM BERÜHRUNGSFREIEN VERMESSEN EINER DREIDIMENSIONALEN OBJEKTOBERFLÄCHE**
DEVICE FOR NON-CONTACT MEASUREMENT OF THE SURFACE OF A THREE DIMENSIONAL OBJECT
DISPOSITIF POUR MESURER SANS CONTACT UNE SURFACE D'OBJET EN TROIS DIMENSIONS

(30) Priorität: 06.05.1996 DE 19618140
(43) Veröffentlichungstag der Anmeldung: 24.02.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: KÜHMSTEDT, Peter, D-07747 Jena (DE); SCHREIBER, Wolfgang, D-07747 Jena (DE); NOTNI, Gunther, D-07747 Jena (DE)
(74) Vertreter: Pfenning, Meinig & Partner
(86) Internationale Anmeldenummer: DE9700896
(87) Internationale Veröffentlichungsnummer: WO9742464

(56) Entgegenhaltungen:
- EP-A- 0 157 299
- DE-A- 4 416 108
- TM TECHNISCHES MESSEN, Bd. 62, Nr. 9, September 1995, MÜNCHEN, DE, Seiten 321-327, XP000527989 W. SCHREIBER, J. GERBER, R. KOWARSCHIK: "Optische Dreikoordinatenmessung mit strukturierter Beleuchtung"
- IEEE TRANSACTIONS ON SYSTEMS, MAN AND CYBERNETICS, Bd. 23, Nr. 3, Mai 1993, NEW YORK, US, Seiten 86864-872, XP000412102 ZEN CHEN, SHINN-YING H., DIN-CHANG T.: "Polyhedral Face Reconstruction and Modeling from a Single Image with structured Light"

## Beschreibung

Die Erfindung betrifft eine Vorrichtung zum berührungsfreien Vermessen einer dreidimensionalen Objektoberfläche nach dem Oberbegriff des Hauptanspruchs.

Derartige Vorrichtungen werden insbesondere im Maschinenbau, Automobilbau, Keramikindustrie, Schuhindustrie, Schmuckindustrie, Dentaltechnik und Humanmedizin und weiteren Bereichen verwendet.

Die steigenden Forderungen nach einer weitgehend vollständigen Qualitätskontrolle im laufenden Produktionsprozeß sowie nach der Digitalisierung der Raumform von Prototypen machen die Aufnahme von Oberflächentopographien zu einer immer häufiger gestellten Meßaufgabe. Dabei stellt sich die Aufgabe, die Koordinaten einzelner Punkte der Oberfläche der zu vermessenden Gegenstände in kurzer Zeit zu bestimmen. Es gibt verschiedene Ansätze, sowohl das Zeit- als auch das Abtastproblem durch den Einsatz optischer Meßverfahren zu lösen. Der Vorteil optischer Meßverfahren liegt in der berührungslosen und damit rückwirkungsfreien Messung sowie darin, daß die Informationen über das Objekt in bildhafter Form und damit leicht verständlich vorliegen. Zu diesen optischen Meßverfahren gehört die Streifenprojektionstechnik einschließlich der Gray-Code-Technik, das Moire-Verfahren, das holografische und Speckle-Contouring sowie die Photogrammetrie. Charakteristisch für diese Verfahren ist, daß die interessierenden Meßgrößen, die Raumkoordinaten der Oberflächen von Gegenständen indirekt aus Phasenmeßwerten in Schnittlinienbildern von Lichtmustern, beispielsweise Streifenmustern, die auf das Objekt projiziert werden, aus Phasenmeßwerten von Moirè, aus Koordinaten der Durchstoßungspunkte von Beobachtungstrahlen durch die Empfängerebene und/oder aus Parametern bestimmt werden, die die Geometrie der Meßanordnung, d. h. die Lichtquellen, optischen Bauelemente sowie die Bildaufzeichnungsvorrichtung charakterisieren. Sind die Geometrieparameter der Meßanordnung bekannt, können aus drei linear voneinander unabhängigen Phasenmeßwerten und/oder Bild- bzw. Pixelkoordinaten die Koordinaten der Meßpunkte auf der Oberfläche des Gegenstandes in einem Sensorkoordinatensystem durch Triangulation berechnet werden. Zur Erzeugung der Lichtmuster werden unterschiedliche Projektionstechniken eingesetzt, beispielsweise programmierbare LCD-Projektoren, verschiebliche Glasträger mit unterschiedlichen Gitterstrukturen in einem Projektor, eine Kombination eines elektrisch schaltbaren Gitters und einer mechanischen Verschiebeeinrichtung oder auch die Projektion von Einzelgittern auf der Basis von Glasträgern.

Die deutsche Offenlegungsschrift DE 44 16 108 A1 offenbart eine Vorrichtung zum berührungsfreien Vermessen einer Objektoberfläche, mittels derer wenigstens drei Streifenmuster auf die Objektoberfläche projizierbar sind. Hierbei sind die Linien der Streifenmuster zueinander winklig ausgerichtet und den Streifenmustern zugeordnete Projektionsachsen sind räumlich gegeneinander geneigt. Durch Bestimmen der Phasenlage von Meßpunkten auf der Objektoberfläche bezüglich jedes der Streifenmuster sind durch die Projektion aus drei unterschiedlichen Raumrichtungen die räumlichen Meßpunktkoordinaten mit den vorgegebenen Winkeln und Ortsfrequenzen der Streifenmuster in einer Recheneinheit einer Auswertevorrichtung in bezug auf einen sich auf der Objektoberfläche befindlichen Referenzpunkt bestimmbar.

Der Erfindung liegt die Aufgabe zugrunde, eine Vorrichtung zum berührungsfreien Vermessen einer dreidimensionalen Objektoberfläche zu schaffen, mit der es möglich ist, die Koordinaten für alle Teilansichten des Meßobjektes in einem einheitlichen Koordinatensystem zu messen, wobei Ausfälle von Meßpunkten infolge von Glanzlichtern oder Abschattungen auf der Objektoberfläche vermieden werden.

Diese Aufgabe wird erfindungsgemäß durch die kennzeichnenden Merkmale des Hauptanspruchs gelöst.

Aufgrund der erfindungsgemäßen Vorrichtung mit der dazu vorgesehenen Kalibrieranordnung ist es möglich, die Koordinaten für alle Teilansichten des Meßobjekts in einem einheitlichen Koordinatensystem zu messen. Dabei wird durch die Verwendung von zwei bzw. drei Drehachsen erreicht, daß alle Teile der Oberfläche des Meßobjekts vermessen werden. Mit einem einmalig durchzuführenden Einmessen mit Hilfe von zwei geeigneten Kalibrierkörpern werden eine bzw. zwei spezielle Achsen für die Objektbewegung im Koordinatensystem vermessen sowie die Gitterperiode im Meßraum und der Winkel α der ersten Drehachse mit der optischen Achse des Projektionssystems bestimmt. Mit den dabei gewonnenen Daten werden die verschiedenen Teilansichten der Meßobjekte in ein einheitliches Koordinatensystem transformiert. Mit der erfindungsgemäßen Vorrichtung wird eine Ganzkörpervermessung mit einer Meßunsicherheit von 10⁻⁴ des Meßvolumens ermöglicht.

Die erfindungsgemäße Vorrichtung besitzt den wesentlichen Vorteil, der auf der freien Wahl der Anzahl der Stellungen des Objekts in bezug auf die Drehachsen und der freien Wahl der Winkel für die einzelnen Stellungen beruht, daß sowohl Ausfälle von Meßpunkten infolge von Glanzlichtern auf der Objektoberfläche als auch Abschattungen der Beleuchtung und/oder der Beobachtung durch eine ausreichende oder geeignete Wahl der Stellungen vermieden werden.

Durch die in den Unteransprüchen angegebenen Maßnahmen sind vorteilhafte Weiterbildungen und Verbesserungen möglich.

Ein Ausführungsbeispiel der Erfindung ist in der Zeichnung dargestellt und wird in der nachfolgenden Beschreibung näher erläutert. Es zeigen:
- Fig. 1: eine schematische Ansicht der erfindungsgemäßen Vorrichtung,
- Fig. 2: eine perspektivische Ansicht und eine Draufsicht auf den ersten Kalibrierkörper, und
- Fig. 3: eine Seitenansicht und eine Draufsicht auf den zweiten Kalibrierkörper.

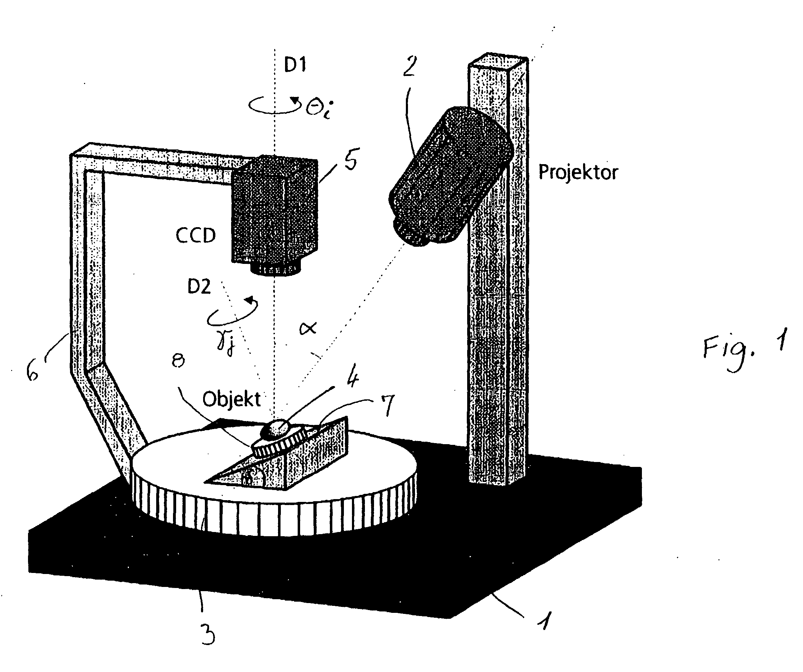

Die in Fig. 1 dargestellte Vorrichtung zum berührungsfreien Messen einer dreidimensionalen Objektoberfläche weist einen fest mit einer Grundplatte 1 verbundenen Projektor 2 auf, der eine Lichtquelle mit Kondensor und Projektionsobjektiv sowie ein Projektionsgitter mit äquidistanten, parallel zueinander angeordneten Gitterlinien und eine Phasenschiebevorrichtung zur Phasenverschiebung der Gitterstruktur umfaßt. Auf der Grundplatte 1 ist weiterhin ein erster Drehtisch vorgesehen, auf dem das zu vermessende Objekt 4 angeordnet ist und mit dem eine Kamera 5, vorzugsweise eine CCD-Kamera, über einen Halterarm 6 fest und starr verbunden ist. Drehtisch 3, Objekt 4 und Kamera 5 sind somit um eine erste Drehachse D1 entsprechend vorgegebener Drehwinkel θᵢ drehbar. Die Drehachse D1 schließt mit der optischen Achse des Projektors einen festen Winkel α ein, wobei durch die Drehung der Kamera 5 und des Objekts 4 um ihre gemeinsame Achse die Beleuchtungsrichtung auf das Objekt verändert wird.

Auf dem ersten Drehtisch 3 ist mittig eine schräge Lagerplatte 7 mit einem Neigungswinkel δ angeordnet, auf der ein zweiter Drehtisch 8 vorgesehen ist, auf dem das Objekt 4 ruht. Der zweite Drehtisch 8 ist um Drehachse D2 entsprechend Drehwinkeln γⱼ drehbar. Die Drehachse D2 ist in dem Ausführungsbeispiel nach Fig. 1 entsprechend δ um 30° zu der senkrechten Drehachse D1 angeordnet und die Drehachse D2 schneidet die Drehachse D1 im Zentrum des Volumens des Meßobjekts 4. Das Koordinatensystem ist so festgelegt, daß die erste Drehachse D1 die z-Achse bildet und daß die gemeinsam durch die erste und zweite Drehachse D1 und D2 aufgespannte Ebene die y-z-Ebene ist, wobei die x-Achse durch den Schnittpunkt von D1 und D2 verläuft und senkrecht auf der y-z-Ebene steht. Weiterhin kann eine nicht dargestellte dritte Drehachse D3 vorgesehen sein, die mit der x-Achse identisch sein soll.

Mit der Meßvorrichtung nach Fig. 1 ist es möglich, die Koordinaten für alle Teilansichten des Objektes 4 in einem einheitlichen Koordinatensystem zu messen. Dabei wird durch die Verwendung der zwei bzw. drei Drehachsen D1, D2 und D3 erreicht, daß alle Teile der Oberfläche des Meßobjektes in einer Ganzkörpervermessung vermessen werden.

Für diese Ganzkörpervermessung muß die Lage der Drehachsen D1, D2 bzw. D3 sowie der Winkel α, die Gitterkonstante Λ bzw. die Ortsfrequenz 2 π/Λ im Meßvolumen bekannt sein.

Das zu messende Objekt 4 wird aufeinanderfolgend mit einer periodischen Gitterstruktur aus unterschiedlichen Richtungen beleuchtet, wobei jeweils das Gitter periodisch senkrecht zu den Gitterlinien und innerhalb der Ebene der Gitterlinien (senkrecht zur Projektionsachse) verschoben wird (z.B. △φ₁ = 0°, △φ₂ = 90°, △φ₃ = 180°). Die Intensitätsverteilung an der Schnittebene der Gitterlinien mit der Objektoberfläche wird durch die CCD-Kamera 5 aufgezeichnet. Die Intensität kann mit folgender Formel beschrieben werden; Iₖ = Iₒ [1+m cos(φ+△ₖ)], wobei m: Modulation zwischen 0 und 1, △φₖ: Phasenschritt, k:Nummer des Phasenschrittes. Aus den phasenverschobenen Intensitätsbildern aus einer Richtung wird jeweils ein Phasenmeßwert φᵢ für jeden Pixel erhalten. Die i verschiedenen Richtungen ergeben dann i linear unabhängige Phasenwerte für jeden Pixel.

Im vorliegenden Fall wird für die Ganzkörpervermessung das zu vermessende Objekt 4 über die Drehachsen D1, D2 bzw. D3 so bewegt, daß alle Teile der Oberfläche durch die CCD-Kamera betrachtet werden. Die dabei gemessenen Teilansichten werden mit Kenntnis der räumlichen Lage von D2 und D3 in ein einheitliches Koordinatensystem transformiert.

Im einzelnen wird die Messung wie folgt durchgeführt:
1) Für eine feste Stellung aller Drehachsen wird ein Intensitätsbild aufgenommen. Dann erfolgt eine Verschiebung des Gitters und eine erneute Intensitätsaufnahme.
   Mit mindestens drei solcher phasenverschobener Intensitätsstrukturen werden die Phasenwerte für jeden Pixel für die feste Stellung aller Drehachsen berechnet.
2) Durch Einstellen einer neuen Position der Drehachse D1 wird eine neue Gitterstruktur auf das Objekt projiziert. Die Schritte aus 1) werden wiederholt.
3) Mit mindestens drei verschiedenen Positionen der Drehachse D1 können für jeden Pixel aus den Phasenmeßwerten aus Schritt 1) die Koordinaten x, y, z berechnet werden.
   Damit ist für eine Teilansicht des Objektes, welche durch die Position der Drehachse D2 gegeben ist, die von der CCD-Kamera gesehen werden kann, die Koordinatenberechnung bezüglich eines Sensorkoordinatensystemes beendet.
4) Es erfolgt eine Drehung des Objektes mit Hilfe der Drehachse D2 um den Drehwinkel γᵢ. Damit wird ein anderer Teil des Objektes in das Blickfeld der CCD-Kamera gebracht.
5) Für diese neue Position der Drehachse D2 werden die Schritte 1) bis 3) wiederholt.
6) Die im Schritt 4) durchgeführte Objektbewegung in bezug auf das Gerätekoordinatensystem wird durch eine Drehung der Koordinaten x, y, z jedes Pixels um die Drehachse D2 mit den Drehwinkeln γᵢ kompensiert. Im Ergebnis werden für alle Teilansichten der Objektoberfläche die Koordinaten in einem einheitlichen Sensorkoordinatensystem erhalten.

Es wird folgender Meßplan verwendet: Fünf Winkelstellungen von D1 (θᵢ = 0°, 60°, 120°, -60°, -120°) und vier Winkelstellungen von D2 (γⱼ = 0°, 90°, 180°, 270°) werden insgesamt zu vier Teilansichtsmessungen kombiniert, die mit zwei Winkelstellungen von D3 (0°, 90°) kombiniert werden. Damit ergeben sich insgesamt acht Teilansichtsmessungen, die für viele Meßobjekte die gesamte Meßobjektoberfläche abdecken. Bei komplizierten Meßobjekten kann die Anzahl der Winkelstellungen für jede der drei Drehachsen beliebig erhöht werden.

Da die Gitterperiode im Meßraum und der Winkel α der ersten Drehachse D1 mit der optischen Achse des Projektors 2 nicht mit ausreichender Genauigkeit sowie die Lage der Drehachsen D2 und D3 nicht im vorhinein bekannt sind, muß ein einmalig durchzuführendes Einmessen in zwei bzw. drei Meßvorgängen mit Hilfe von zwei geeigneten Kalibrierkörpern vorgenommen werden.

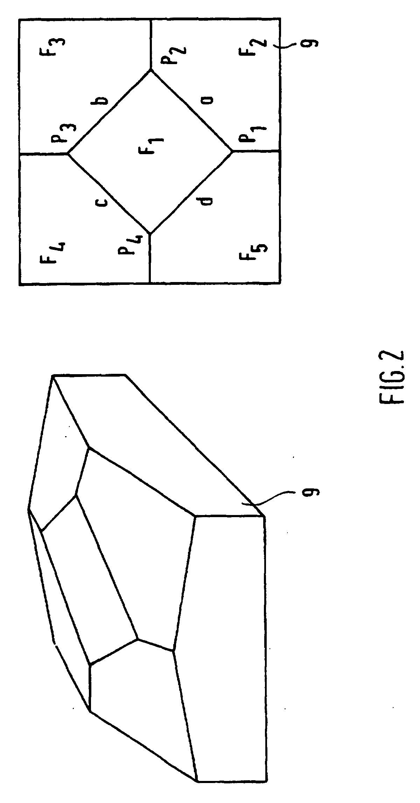

Mit dem in Fig. 2 in perspektivischer Ansicht und in Draufsicht gezeigten ersten Kalibrierkörper werden die Gitterperiode Λ im Meßraum, d.h. an dem Ort, an dem sich zur Zeit des Messungen das Meßobjekt befindet, und der Winkel α bestimmt. Dieser Kalibrierkörper 9 weist prismaähnlich angeordnete ebene Flächen auf, wobei die Abstände a, b, c, d der Punkte P1, P2, P3, P4 vorher gemessen bzw. berechnet wurden. Diese Abstände sind unabhängig von der Orientierung des Kalibrierkörpers 9 in dem Meßraum. Weiterhin sind die Winkel zwischen den Normalenvektoren der Seitenflächen F2, F3, F4, F5 zum Normalenvektor der mittleren Fläche F1 als vorgegebene Parameter bekannt.

Wie vorher beschrieben, wird auch hier die Streifenstruktur auf den Kalibrierkörper 9 projiziert und die Phasenwerte berechnet. Es werden die Abstände a₀, b₀, c₀, d₀ unter Verwendung von Startwerten Λ₀ und α₀ berechnet. Diese Startwerte sollen nicht wesentlich von den korrekten Werten abweichen (für den Winkel α einige Grad und für die Gitterperiode Λ weniger 50 %). Nachfolgend wird eine iterative Korrektur dieser Startwerte mit Hilfe der bekannten Sollkenngrößen des ersten Kalibrierkörpers 9 durchgeführt, bis der Konvergenztest erfüllt wird. Auf diese Weise kann die Gitterperiode Λ und der Winkel α durch Einmessung gefunden werden. Der Kalibrierkörper ist durch die Länge der Seiten der oberen Fläche und die Winkel zwischen der oberen Fläche und den vier Seitenflächen als Kenngrößen charakterisiert. Die Koordinaten des Körpers sind nicht wesentlich, da an die genaue Positionierung im Meßvolumen keine Forderungen gestellt sind und damit keine Koordinaten als Referenzwerte zur Verfügung stehen. Wesentlich sind die ebenen Flächen und die bereits genannten Kenngrößen, da diese lageunabhängig sind.

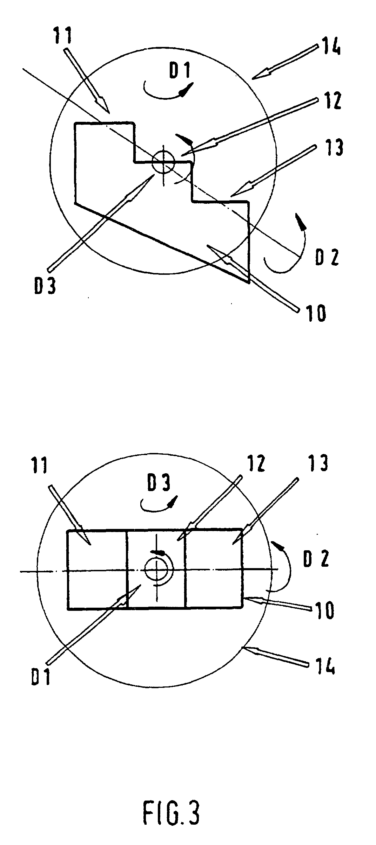

In Fig. 3 ist der zweite Kälibrierkörper 10 in Seitenansicht und Draufsicht dargestellt, mit dem die Lage der Drehachsen D2 und D3 im Raum bestimmt wird. Dazu werden jeweils die Koordinaten von zwei oder mehr einzelnen Punkten auf der Drehachse D2 und der Drehachse D3 gemessen.

Der Kalibrierkörper 10 weist im Ausführungsbeispiel drei Ebenen 11, 12, 13 auf, die abgestuft zueinander angeordnet sind und die innerhalb des durch den Kreis angedeuteten Meßvolumens 14 positioniert sind. Wie aus der Fig. 3 zu erkennen ist, steht die Drehachse D1 senkrecht zur mittleren Ebene 12, die Drehachse D2 verbindet in etwa die Mittelpunkte der Ebenen 11, 12, 13 und die Drehachse D3 geht parallel zur mittleren Ebene 12, d.h., die Drehachsen D2 bzw. D3 verlaufen näherungsweise durch die Mitte der Ebene 12, wobei diese Bedingung nur ungefähr erfüllt sein muß und keine genaue Positionierung des zweiten Kalibrierkörpers 10 erfordert.

Die Berechnung der gesuchten Punkte auf der Drehachse D2 erfolgt, indem für verschiedene Stellungen der Drehachse jeweils die einzelnen Ebenen gemessen werden. Dann werden für jede Ebene die Schnittpunkte auf der Achse berechnet. Dabei ist die Genauigkeit der Schnittpunktberechnung größer, wenn der Punkt innerhalb der gemessenen Bereiche der Ebene liegt und bei der Schnittpunktberechnung eine Interpolation erfolgt. Wenn der Punkt weit außerhalb der Mitte der Ebene 12 liegt, dann erfolgt eine Extrapolation mit schlechterer Genauigkeit. Dies gilt für andere Ebenen entsprechend.
Bei der Einmessung der Drehachsen D2 und D3 wird die Ebene 12 um die Drehachse D2 bzw. D3 gedreht, wobei der Normalenvektor der Ebene 12 mit der Drehachse D2 bzw. D3 einen Winkel ungleich 0° bzw. ungleich 90° bildet. Günstig sind Winkel von 45° bzw. 135°. Die Ebene 12 wird bei verschiedenen Stellungen der Drehachsen D2 bzw. D3 im gleichen Koordinatensystem gemessen, wobei Stellungen von 0°, -45°, +45° für die Drehachse D2 und von 0°, 45°, 90° für die Drehachse D3 geeignet sind. Aus diesen Messungen wird ein Punkt bestimmt, der sowohl auf der Ebene 12 als auch auf der Drehachse D2 bzw. der Drehachse D3 liegt. Wenn eine Ebene mit den obengenannten Bedingungen um die Drehachse D2 bzw. die Drehachse D3 kreist, wobei der Normalenvektor der Ebene 12 mit D2 bzw. D3 einen Winkel von ungleich 0 bzw. ungleich 90° bildet, dann umschreibt sie einen Doppelkegel und die Spitze der beiden Kegelhälften stellt einen Punkt auf der Drehachse D2 bzw. D3 dar. Durch Verwendung einer zweiten solchen Ebene, zum Beispiel der Ebene 13, die die Drehachse D2 bzw. die Drehachse D3 in einem geeigneten Abstand von der ersten Ebene 12 schneidet, kann ein zweiter Punkt auf D2 bzw. D3 bestimmt werden und damit sind die Drehachse D2 bzw. die Drehachse D3 eindeutig im Raum bestimmbar. Die Verwendung von mehr als zwei Ebenen 12, 13 bzw. 11 ist möglich und verbessert die Genauigkeit, mit der die Lage der Drehachsen D2 bzw. D3 gemessen werden kann.

Wesentliche Anforderungen an den verwendeten Kalibrierkörper 10 mit den Ebenen 11 bis 13 sind die folgenden: die Ebenen müssen eben sein. Die Phasenwerte müssen für einen erheblichen Anteil der Punkte der einzelnen Ebenen 11 bis 13 für die Mehrzahl der verwendeten Stellungen der Drehachse D1 meßbar sein, d.h., daß für jede Stellung der Drehachse D1 zwar ein Teil oder auch die ganze Ebene nicht notwendigerweise meßbar sein müssen, daß jedoch in der Gesamtheit aller Stellungen der Drehachse D1 jede Ebene ausreichend gut zu messen sein muß. Das bedeutet, daß für ausreichend viele Punkte jeder Ebene ausreichend Phasenwerte für die verschiedenen Stellungen der Drehachse D1 zur Verfügung stehen müssen, so daß die Koordinaten der einzelnen Punkte berechnet werden können. Weiterhin muß ein erheblicher Anteil der einzelnen Ebenen 11 bis 13 für die Mehrzahl der verwendeten Stellungen der Drehachsen D2 bzw. D3 im Sinne der obigen Bedingung für die einzelnen Stellungen der Drehachse D1 meßbar sein. Der Abstand der Durchstoßungspunkte der Drehachse D2 bzw. D3, durch die beiden bzw. die drei Ebenen 11 bis 13 muß dem zu vermessenden Gesamtvolumen 14 des Systems angepaßt sein und sollte nicht kleiner als 25 % der Ausdehnung des zu vermessenden Gesamtvolumens sein, wobei hier unter Ausdehnung die Länge, Breite oder Höhe des Meßvolumens verstanden wird, und zwar der größte von diesen drei Werten, wenn sie unterschiedlich sind. Wenn mehr als zwei Ebenen verwendet werden, dann sollten die Durchstoßungspunkte, wie im vorliegenden Ausführungsbeispiel, gleichmäßig auf D2 bzw. D3 innerhalb des Meßvolumens 14 aufgeteilt werden.

Die Verwendung anderer Flächen ist möglich, solange eine Überlagerung der einzelnen Teilmessungen (entsprechend den verschiedenen Stellungen der Drehachse D2) für jede Fläche einen eindeutigen Schnittpunkt auf D2 ergibt. Beispiel für solche Flächen sind Teile einer Kugel, Zylinderabschnitte o.ä. Die Berechnung der Teilflächen ist jedoch stets aufwendiger und ungenauer als im Falle der Verwendung von Ebenen als Flächen. Damit ist auch die Genauigkeit der berechneten Punkte auf D2 geringer.

Im folgenden wird das Meßverfahren hinsichtlich der einzelnen Schritte zur Bestimmung der Lage der Drehachsen D2 bzw. D3 genauer beschrieben.

Der Kalibrierkörper wird innerhalb des zu vermessenden Gesamtvolumens 14, d.h. innerhalb des Meßraums angeordnet und es werden mit dem Projektor 2 nach Fig. 1 mindestens drei phasenverschobene Gitter auf den Kalibrierkörper 10 projiziert, wobei die Drehachsen D1, D2 und D3 jeweils eine feste Stellung aufweisen. Die Kamera 5 mißt die Intensitätsverteilung, d.h. mindestens drei phasenverschobene Bilder der projizierten Gitter. Anschließend werden die Phasenwerte für die jeweiligen Meßpunkte auf dem Kalibrierkörper 10 mittels der oben angegebenen Gleichung berechnet, wobei die Gitterkonstante Λ und der Projektionswinkel α bekannt sind.

Die zuvor beschriebene Messung bzw. Bestimmung der Phasenwerte wird für mindestens zwei weitere verschiedene Stellungen des Kalibrierkörpers 10 in bezug auf die Drehachse D1 (realisiert durch die Drehung des Drehtisches 3 um D1), vorzugsweise von 3 bis 16 Stellungen wiederholt, wobei die Stellungen in bezug auf die Drehachsen D2 und D3 unverändert bleiben. Es werden nun die Koordinaten der Meßpunkte unter Verwendung der jeweiligen zuvor bestimmten Phasenwerte und unter Verwendung aller Stellungen in bezug auf die Drehachse D1 berechnet. Aus diesen Koordinaten werden die Parameter aller Ebenen 11 bis 13 des zweiten Kalibrierkörpers 10 bestimmt. Die Ebenen können vollständig durch jeweils die Angabe eines Normalenvektors mit der Länge 1 und des Abstandes zum Koordinatenursprung als skalare Größe dargestellt werden.

Daraufhin werden die obigen Messungen und Berechnungen für verschiedene Stellungen des Kalibrierkörpers 10 in bezug auf die Drehachsen D2 (realisiert durch die Drehung des zweiten Kalibrierkörpers um D2 mit dem zweiten Drehtisch 8) oder D3 wiederholt, wobei dies entweder nur in bezug auf die Drehachse D2 oder nur in bezug auf die Drehachse D3, und zwar für insgesamt mindestens drei verschiedene Stellungen gilt. Aus den Meßwerten wird unter Verwendung der zuvor bestimmten Parameter der verschiedenen Ebenen 11 bis 13 die mindestens zwei Punkte auf der Drehachse D2 bzw. D3 berechnet. Aus diesen Punkten wird anschließend die räumliche Lage der Drehachse D2 bzw. der Drehachse D3 bestimmt.

## Patentansprüche

1. Vorrichtung zum berührungsfreien Vermessen einer dreidimensionalen Objektoberfläche in einem Meßraum mit einer Projektionsvorrichtung, die eine Streifenstruktur auf die Oberfläche eines Objektes projiziert, einer Beobachtungseinrichtung zum Erfassen der Streifenstruktur an Meßpunkten auf der Oberfläche des Objektes, einer Vorrichtung zum Bewegen des Objektes zusammen mit der Beobachtungseinrichtung um eine erste Drehachse und einer Auswerteeinheit zur Bestimmung der Koordinaten der Meßpunkte unter Verwendung der Phasenwerte der Streifenstruktur in einem vorbestimmten Koordinatensystem,
**dadurch gekennzeichnet,**
**daß** eine Vorrichtung (8) zum Bewegen des Objektes um mindestens eine von der ersten Drehachse (D1) unabhängige zweite Drehachse (D2) und eine Kalibrieranordnung vorgesehen sind, wobei mit der Kalibrieranordnung (10) die Lage der zweiten Drehachse (D2) im vorgegebenen Koordinatensystem bestimmbar ist.

2. Vorrichtung nach Anspruch 1, **dadurch gekennzeichnet, daß** eine Vorrichtung zum Bewegen des Objektes (4) um eine dritte, von den anderen Drehachsen (D1,D2) unabhängige Drehachse (D3) vorgesehen ist, wobei über die Kalibrieranordnung (9,10) die Lage der dritten Drehachse im vorgegebenen Koordinatensystem bestimmbar ist.

3. Vorrichtung nach Anspruch 1 oder Anspruch 2, **dadurch gekennzeichnet, daß** die Kalibrieranordnung einen ersten Kalibrierkörper (9) zur Bestimmung der Gitterperiode (Λ) im Meßraum und des Winkels (α) zwischen der optischen Achse der Projektionsvorrichtung (2) und der ersten Drehachse (D1) und einen zweiten Kalibrierkörper (10) zur Bestimmung von mindestens zwei Punkten auf der zweiten und/oder dritten Drehachse (D2,D3) aufweist.

4. Vorrichtung nach Anspruch 3, **dadurch gekennzeichnet, daß** der erste Kalibrierkörper als prismatischer Körper (9) mit mehreren aneinanderstoßenden Ebenen (F₁-F₅) ausgebildet ist, deren Parameter vorgegeben sind.

5. Vorrichtung nach Anspruch 3, **dadurch gekennzeichnet, daß** der zweite Kalibrierkörper (10) mindestens zwei abgestufte Ebenen (11-13) aufweist, deren Normalvektoren mit der zweiten und/oder dritten Drehachse einen Winkel ungleich 0° und ungleich 90° bilden.

6. Vorrichtung nach Anspruch 5, **dadurch gekennzeichnet, daß** der Abstand der Durchstoßungspunkte der zweiten und/oder dritten Drehachse (D2,D3) durch die beiden Ebenen (11-13) dem zu vermessenden Gesamtvolumen angepaßt ist.

7. Vorrichtung nach Anspruch 6, **dadurch gekennzeichnet, daß** der Abstand der Durchstoßungspunkte nicht kleiner als 25 % der Ausdehnung des zu vermessenden Gesamtvolumens ist.

8. Vorrichtung nach einem der Ansprüche 1 bis 4, **dadurch gekennzeichnet, daß** abhängig von mit dem ersten Kalibrierkörper (9) gemessenen Phasenwerten und den bekannten Parametern des ersten Kalibrierkörpers (9) die Auswerteeinheit mit Hilfe von willkürlich gewählten Startwerten der Gitterperiode (Λ) und des Winkels (α) zwischen der optischen Achse der Projektionsvorrichtung (2) und der ersten Drehachse (D1) Koordinaten auf dem Kalibrierkörper (9) berechnet und durch eine darauffolgende iterative Korrektur die wirklichen Werte der Gitterperiode (Λ) und des Winkels (α) bestimmt.

9. Vorrichtung nach einem der Ansprüche 1 bis 3 und 5 bis 7, **dadurch gekennzeichnet, daß** in einem ersten Meßvorgang bei fester Stellung des zweiten Kalibrierkörpers (10) in bezug auf die erste, die zweite und gegebenenfalls die dritte Drehachse (D1,D2,D3) die Intensitätsverteilung von mindestens drei aufgrund von phasenverschobenen Gitterstrukturen erhaltenen Bildern an Meßpunkten bestimmt und die Phasenwerte an den Meßpunkten berechnet werden, daß als zweiter Meßvorgang der erste Meßvorgang für mindestens zwei weitere verschiedene Stellungen des zweiten Kalibrierkörpers (10) in bezug auf die erste Drehachse (D1) wiederholt wird und unter Verwendung der Phasenwerte die Parameter der Ebenen (11-13) des zweiten Kalibrierkörpers (10) berechnet werden und daß als dritter Meßvorgang der erste und zweite Meßvorgang für unterschiedliche Stellungen des Kalibrierkörpers (10) in bezug auf die zweite Drehachse (D2) oder die dritte Drehachse (D3) wiederholt werden und mindestens zwei Punkte auf der zweiten Drehachse (D2) bzw. auf der dritten Drehachse (D3) unter Verwendung der Parameter der verschiedenen Ebenen des zweiten Kalibrierkörpers (10) berechnet werden und die räumliche Lage der zweiten Drehachse (D2) und die räumliche Lage der Drehachse (D3) unter Verwendung der Punkte berechnet werden.

10. Vorrichtung nach Anspruch 9, **dadurch gekennzeichnet, daß** die Parameter der Ebenen (11-13) jeweils der Normalenvektor und der Abstand zum Nullpunkt des Koordinatensystems sind.

## Claims

1. Device for the non-contact measurement of a three-dimensional object surface in a measuring area, with a projection device which projects a strip pattern on to the surface of an object, an observation device for registering the strip pattern at measuring points on the surface of the object, a device for moving the object and the observation device together about a first rotational axis, and an evaluation unit for determining the coordinates of the measuring points, using the phase values of the strip pattern in a predetermined coordinate system,
**characterised by** the fact
that a device (8) for moving the object about at least one second rotational axis (D2) - said axis being independent of the first rotational axis - and a calibration system are provided, where the position of the second rotational axis (D2) can be determined within the preset coordinate system by means of the calibration system (10).

2. Device as in Claim 1, **characterised by** the fact that a device is provided for moving the object (4) about a third rotational axis (D3) which is independent of the other rotational axes (D1, D2), where the position of the third rotational axis can be determined within the preset coordinate system by means of the calibration system (9, 10).

3. Device as in Claim 1 or 2, **characterised by** the fact that the calibration system has a first calibration body (9) for determining the grid cycle (Λ) in the measuring area and the angle (α) between the optical axis of the projection device (2) and the first rotational axis (D1), and a second calibration body (10) for determining at least two points on the second and/or third rotational axis (D2, D3).

4. Device as in Claim 3, **characterised by** the fact that the first calibration body is in the form of a prismatic body (9) with several abutting planes (F₁ - F₅), the parameters of which planes are preset.

5. Device as in Claim 3, **characterised by** the fact that the second calibration body (10) has at least two stepped planes (11 - 13), the normal vectors of which form, with the second and/or third rotational axis, an angle which is not equal to 0° and not equal to 90°.

6. Device as in Claim 5, **characterised by** the fact that the spacing of the piercing points of the second and/or third axis (D2, D3) through the two planes (11-13) is adjusted in accordance with the overall volume which is to be measured.

7. Device as in Claim 6, **characterised by** the fact that the spacing of the piercing points is not less than 25% of the extent of the overall volume which is to be measured.

8. Device as in one of Claims 1 to 4, **characterised by** the fact that - dependent on the phase values measured with the first calibration body (9) and on the known parameters of the first calibration body (9) - the evaluation unit calculates coordinates on the calibration body (9) by means of initial values, selected at random, of the grid cycle (Λ) and of the angle (α) between the optical axis of the projection device (2) and the first rotational axis (D1), and determines the actual values of the grid cycle (Λ) and the angle (α) by means of a subsequent iterative correction.

9. Device as in one of Claims 1 to 3 and 5 to 7, **characterised by** the fact
- that in a first measuring process, where the position of the second calibration body (10) is fixed in relation to the first, second and (where appropriate) third rotational axis (D1, D2, D3), the intensity distribution of at least three images captured from phase-displaced mesh effects is determined at measuring points, and the phase values at the measuring points are calculated;
- that in the second measuring process, the first measuring process is repeated for at least two additional different positions of the second calibration body (10) in relation to the first rotational axis (D1), and the parameters of the planes (11 - 13) of the second calibration body (10) are calculated using the phase values, and
- that in the third measuring process, the first and second measuring processes are repeated for different positions of the calibration body (10) in relation to the second rotational axis (D2) or the third rotational axis (D3), and at least two points are calculated on the second rotational axis (D2) or on the third rotational axis (D3) as the case may be, using the parameters of the various planes of the second calibration body (10); and the spatial position of the second rotational axis (D2) and the spatial position of the rotational axis (D3) are calculated using the points.

10. Device as in Claim 9, **characterised by** the fact that the parameters of the planes (11 - 13) are in each case the normal vector and the distance from the zero point of the coordinate system.

## Revendications

1. Dispositif pour mesurer sans contact une surface d'objet en trois dimensions dans un espace de mesure équipé d'un dispositif de projection qui projette une structure en bande sur la surface d'un objet, d'un dispositif d'observation permettant d'enregistrer la structure en bande au niveau de points de mesure sur la surface de l'objet, d'un dispositif permettant de déplacer l'objet avec le dispositif d'observation autour d'un premier axe de rotation, et d'une unité d'interprétation permettant de déterminer les coordonnées des points de mesure en utilisant les valeurs de phase de la structure en bande dans un système de coordonnées déterminé,
**caractérisé en ce que** sont prévus un dispositif (8) de déplacement de l'objet autour d'au moins un second axe de rotation (D2) indépendant du premier axe de rotation (D1) et un dispositif de calibrage, la position du second axe de rotation (D2) pouvant être déterminée dans un système de coordonnées prédéfini avec le dispositif de calibrage (10).

2. Dispositif selon la revendication 1, **caractérisé en ce qu'**un dispositif de déplacement de l'objet (4) autour d'un troisième axe de rotation (D3) indépendant des autres axes de rotation (D1, D2) est prévu, la position du troisième axe de rotation pouvant être déterminée dans un système de coordonnées prédéfini par le biais du dispositif de calibrage (9, 10).

3. Dispositif selon la revendication 1 ou la revendication 2, **caractérisé en ce que** le dispositif de calibrage présente un premier corps de calibrage (9) permettant de déterminer la période de grille (Λ) dans l'espace de mesure et l'angle (α) entre l'axe optique du dispositif de projection (2) et le premier axe de rotation (D1), et un second corps de calibrage (10) permettant de déterminer au moins deux points sur le second et/ou le troisième axe(s) de rotation (D2, D3).

4. Dispositif selon la revendication 3, **caractérisé en ce que** le premier corps de calibrage est conçu en tant que corps prismatique (9) présentant plusieurs plans (F1-F5) qui se touchent et dont les paramètres sont prédéfinis.

5. Dispositif selon la revendication 3, **caractérisé en ce que** le second corps de calibrage (10) présente au moins deux plans échelonnés (11-13) dont les vecteurs normaux forment avec le second et/ou le troisième axe(s) de rotation un angle différent de 0° et différent de 90°.

6. Dispositif selon la revendication 5, **caractérisé en ce que** l'écart entre les points de percée du second et/ou du troisième axe(s) de rotation (D2, D3) par les deux plans (11-13) est adapté au volume total à mesurer.

7. Dispositif selon la revendication 6, **caractérisé en ce que** l'écart entre les points de percée n'est pas inférieur à 25 % de la dimension du volume total à mesurer.

8. Dispositif selon l'une des revendications 1 à 4, **caractérisé en ce que**, en fonction des valeurs de phase mesurées avec le premier corps de calibrage (9) et des paramètres connus du premier corps de calibrage (9), l'unité d'interprétation, à l'aide de valeurs de départ sélectionnées arbitrairement de la période de grille (Λ) et de l'angle (α) entre l'axe optique du dispositif de projection (2) et le premier axe de rotation (D1), calcule les coordonnées sur le corps de calibrage (9), et détermine, par une correction itérative consécutive, les valeurs réelles de la période de grille (Λ) et de l'angle (α).

9. Dispositif selon l'une des revendications 1 à 3 et 5 à 7, **caractérisé en ce que**, lors d'un premier processus de mesure, avec une position fixe du second corps de calibrage (10) par rapport au premier, au second et éventuellement au troisième axe(s) de rotation (D1, D2, D3), on détermine la répartition des intensités d'au moins trois images obtenues sur la base des structures de grille décalées en phase au niveau des points de mesure, **en ce que**, en tant que second processus de mesure, on répète le premier processus de mesure pour au moins deux autres positions différentes du second corps de calibrage (10) par rapport au premier axe de rotation (D1) et, en utilisant les valeurs de phase, on calcule les paramètres des plans (11-13) du second corps de calibrage (10), et **en ce que**, en tant que troisième processus de mesure, on répète le premier et le second processus de mesure pour différentes positions du corps de calibrage (10) par rapport au second axe de rotation (D2) ou au troisième axe de rotation (D3) et on calcule au moins deux points sur le second axe de rotation (D2) ou sur le troisième axe de rotation (D3) en utilisant les paramètres des différents plans du second corps de calibrage (10), puis on calcule la position spatiale du second axe de rotation (D2) et la position spatiale de l'axe de rotation (D3) en utilisant les points.

10. Dispositif selon la revendication 9, **caractérisé en ce que** les paramètres des plans (11-13) sont respectivement le vecteur normal et l'écart au point zéro du système de coordonnées.
